# EUROPEAN PATENT APPLICATION

(11) **EP 4 718 660 A1**
(43) Date of publication of application: **01.04.2026**
(21) Application number: 25161775.9
(22) Date of filing: 05.03.2025
(51) Int. Cl.: H02J 3/32, H02J 7/00, H02J 7/35

(54) **ENERGY STORAGE APPLIANCE AND POWER SUPPLY SYSTEM**

(30) Priority: 27.09.2024 CN 202411369887; 11.11.2024 WO PCT/CN2024/131246
(71) Applicant: Eve Energy Storage Co., Ltd, Wuhan, Hubei 430074 (CN)
(72) Inventor: ZHAO, Kun, Wuhan, Hubei 430074 (CN); TIAN, Zhao, Wuhan, Hubei 430074 (CN); PAN, Zerong, Wuhan, Hubei 430074 (CN)
(74) Representative: Zhu, Puxing

(57) **Abstract**

The present disclosure provides an energy storage appliance and a power supply system. The energy storage appliance includes an appliance body (10) and an energy storage battery (20). The appliance body (10) has an energy storage chamber (110). An outer surface of the appliance body (10) is formed with a first junction (120) configured to connect a mains supply grid (50) and a second junction (130) configured to connect a load circuit (60). The energy storage battery (20) is installed in the energy storage chamber (110). An input terminal of the energy storage battery (20) is electrically connected to the first junction (120) and configured to charge the energy storage battery (20) through the mains supply grid (50). An output terminal of the energy storage battery (20) is electrically connected to the appliance body (10) and the second junction (130) and configured to supply power to the appliance body (10) and the load circuit (60).

## Description

### TECHNICAL FIELD

The present disclosure relates to the field of energy storage technologies, and more particular to an energy storage appliance and a power supply system.

### BACKGROUND

In the field of battery technologies, energy storage products may be used as backup power sources to supply power to an entire house in case of power failure, thereby ensuring power supply and improving power supply stability.

### SUMMARY

In the related art, the energy storage products are generally sold separately and not only occupy an indoor space when installed, but also it is necessary to perforate a wall to enable the energy storage products to be reliably fixed onto the wall. This results in not only inconvenient installation of the energy storage products, but also in the occupation of the indoor space.

The present disclosure provides an energy storage appliance. The energy storage appliance includes: an appliance body having an energy storage chamber, where an outer surface of the appliance body is formed with a first junction configured to connect a mains supply grid and a second junction configured to connect a load circuit; and an energy storage battery installed in the energy storage chamber, where an input terminal of the energy storage battery is electrically connected to the first junction and configured to charge the energy storage battery through the mains supply grid, and an output terminal of the energy storage battery is electrically connected to the appliance body and the second junction and configured to supply power to the appliance body and the load circuit.

The present disclosure further provides a power supply system. The power supply system includes: a load circuit; a load electrically connected to the load circuit; and the energy storage appliance as described above; where the energy storage battery is electrically connected to the load circuit through the second junction.

### Beneficial Effects

According to the power supply system provided in the present disclosure, the energy storage battery is stored in the energy storage chamber by constructing the energy storage chamber in the appliance body, and no longer occupies the indoor space based on the built-in energy storage battery, so that the use area of the house can be increased, and the energy storage battery can be simultaneously carried and installed along with the appliance body, thereby reducing the installation cost and improving the installation efficiency. The mains supply grid may charge the energy storage battery through the first junction, and the energy storage battery may store electric energy as a standby electrical energy or directly output the electrical energy. The energy storage battery may directly supply power to the appliance body or supply power to the load circuit through the second junction, thereby realizing power consumption of the appliance body and other loads.

### DESCRIPTION OF THE DRAWINGS

FIG. 1 is a schematic structural diagram of an energy storage appliance according to some embodiments of the present disclosure.
FIG. 2 is a schematic diagram of electrical transmission among an appliance body, a mains grid and a load circuit according to some embodiments of the present disclosure.
FIG. 3 is a schematic diagram of electrical transmission among an energy storage battery, a conversion module, a mains supply grid, and a load circuit according to some embodiments of the present disclosure.
FIG. 4 is a schematic diagram of electrical transmission among an appliance body, a photovoltaic mechanism, a mains supply grid, and a load circuit according to some embodiments of the present disclosure.
FIG. 5 is a schematic structural diagram of a first junction, a second connector, a third junction, and a fourth junction of an appliance body according to some embodiments of the present disclosure.
FIG. 6 is a schematic structural diagram of an energy storage battery according to some embodiments of the present disclosure.
FIG. 7 is a schematic structural diagram of a cooling circuit according to some embodiments of the present disclosure.
FIG. 8 is a first cross-sectional view of an energy storage chamber of an appliance body according to some embodiments of the present disclosure.
FIG. 9 is a second cross-sectional view of an energy storage chamber of an appliance body according to some embodiments of the present disclosure.

### REFERENCE NUMERALS OF THE ACCOMPANYING DRAWING:

10. Appliance body; 110. Energy storage chamber; 1110. Energy storage evaporator; 1120. Working cavity; 1130. Cooling cavity; 1140. Storage cavity; 1150. Reflux cavity; 120. First junction; 130. Second junction; 140. Third junction; 150. Fourth junction; 160. Freezing chamber; 1610. Freezing evaporator; 170. Refrigerating chamber; 1710. Refrigerating evaporator; 20. Energy storage battery; 210. Battery module; 220. Cell; 230. Support; 240. Flow channel; 250. End plate; 30. Conversion module; 40. Photovoltaic mechanism; 50. Mains supply grid; 60. Load circuit; 70. Cooling mechanism; 710. Compressor; 720. Condenser; 80. First separator; 810. Air inlet; 820. Return air outlet; 90. Second separator; 910. Ventilation hole.

### DETAILED DESCRIPTION

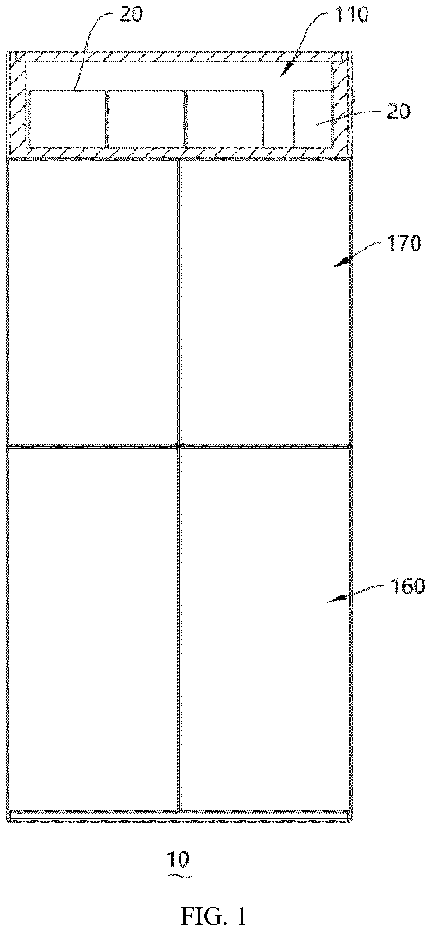

As shown in FIGS. 1-9, an embodiment of the present disclosure provides an energy storage appliance. The energy storage appliance includes an appliance body 10 and an energy storage battery 20. The appliance body 10 has an energy storage chamber 110. An outer surface of the appliance body 10 is formed with a first junction 120 configured to connect a mains supply grid 50 and a second junction 130 configured to connect a load circuit 60. The energy storage battery 20 is installed in the energy storage chamber 110. An input terminal of the energy storage battery 20 is electrically connected to the first junction 120 and configured to charge the energy storage battery 20 through the mains supply grid 50. An output terminal of the energy storage battery 20 is electrically connected to the appliance body 10 and the second junction 130 and configured to supply power to the appliance body 10 and the load circuit 60.

In the embodiment of the present disclosure, the energy storage battery 20 is stored in the energy storage chamber 110 by constructing the energy storage chamber 110 in the appliance body 10, and no longer occupies the indoor space based on the built-in energy storage battery 20, so that the use area of the house can be increased, and the energy storage battery 20 can be simultaneously carried and installed along with the appliance body 10, thereby reducing the installation cost and improving the installation efficiency. The mains supply grid 50 may charge the energy storage battery 20 through the first junction 120, and the energy storage battery 20 may store electric energy as a standby electrical energy or directly output the electrical energy. The energy storage battery 20 may directly supply power to the appliance body 10 or supply power to the load circuit 60 through the second junction 130, thereby realizing power consumption of the appliance body 10 and other loads.

The appliance body 10 may be a home appliance such as a refrigerator, a freezer, a washing machine, a dryer, a water heater, an air conditioner, or a dishwasher. The electric appliance body 10 may also be a commercial appliance such as a commercial oven, a commercial bread oven, or a food processing machine. According to the embodiment of the present disclosure, the appliance body 10 can be provided as a refrigerator. The energy storage chamber 110 can be reserved in the appliance body 10, or the energy storage chamber 110 can be constructed in an upper space of the appliance body 10, so as to store the energy storage battery 20 in the energy storage chamber 110.

The load circuit 60 corresponds to the appliance body 10. When the appliance body 10 is the home appliance, the load circuit 60 is a home circuit. In this case, the energy storage battery 20 may supply power to the load circuit 60 through the second junction 130 to supply power to other home loads. When the appliance body 10 is the commercial appliance, the load circuit 60 is a commercial circuit. In this case, the energy storage battery 20 may supply power to the load circuit 60 through the second junction 130 to supply power to other commercial loads.

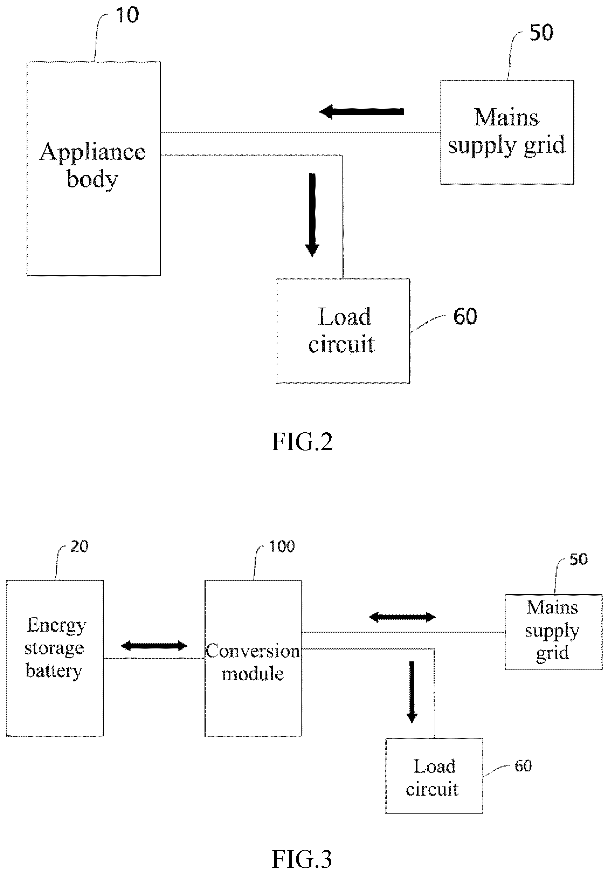

Since the energy storage battery 20 directly supplies power to the appliance body 10, the appliance body 10 can be kept in a power supply state in case of a sudden power failure condition, so that continuous use of the appliance body 10 can be ensured. As shown in FIG. 2, the mains supply grid 50 may supply power to the load circuit 60 through the energy storage battery 20, and the energy storage battery 20 may synchronously store electric energy and supply power. As a result, a load of the load circuit 60 can be kept in a power supply state in case of a sudden power failure condition, and continuous use of the load can be ensured.

The mains supply grid 50 may supply power to the load circuit 60 through the energy storage battery 20, and the energy storage battery 20 may store electric energy during a power valley period and supply power to the load of the load circuit 60 during a power peak period. Thus, by reasonably selecting an energy storage period, the pressure of the grid is reduced, the energy consumption of the power system is reduced, energy saving and emission reduction are realized, and the expense of electricity charges can be reduced.

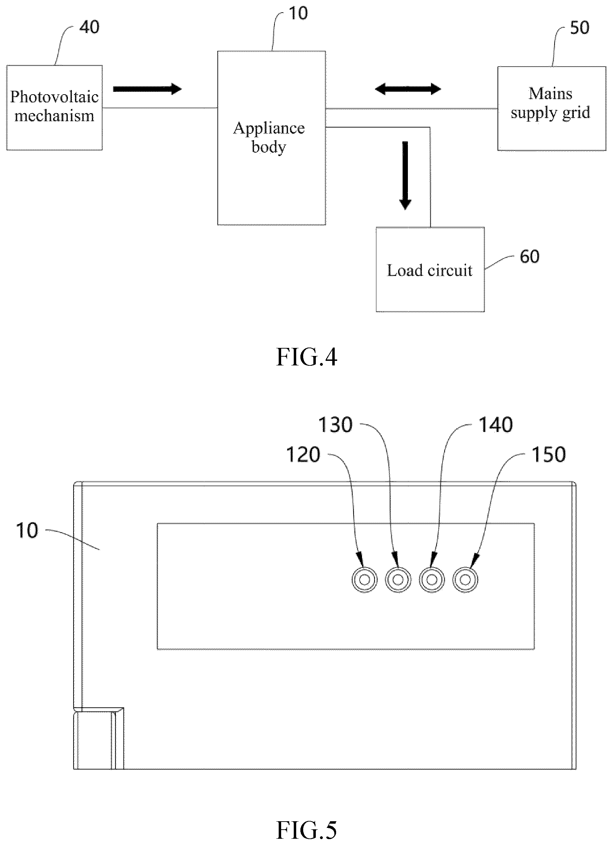

As shown in FIG. 5, the first junction 120 is integrated on the outer surface of the appliance body 10 and may be electrically connected to the mains supply grid 50. The mains supply grid 50 may supply power to other appliances only through a direction of the first junction 120-a conversion module 30-the energy storage battery 20-the second junction 130-the load circuit 60. Alternatively, the mains supply grid 50 may be electrically connected to the load circuit 60 through another branch to supply power to other appliances.

The second junction 130 is integrated on the outer surface of the appliance body 10. The second junction 130 may be electrically connected to the load circuit 60, and no socket may be provided on the appliance body 10. Of course, the second junction 130 may also be provided as a socket to which the load circuit 60 is plugged by a plug for electrical connection to the second junction 130.

As shown in FIG. 3, in some embodiments of the present disclosure, the energy storage appliance further includes a conversion module 30. The conversion module 30 is installed in the energy storage chamber 110. The conversion module 30 is electrically connected between the first junction 120 and the input terminal of the energy storage battery 20, and is configured to convert an alternating current of the mains supply grid 50 into a direct current and deliver the direct current to the energy storage battery 20.

The conversion module 30 employs Power Conversion System (PCS) or Energy storage converter. Since the energy storage battery 20 can only store the direct current, the alternating current in the mains supply grid 50 is converted into the direct current through the conversion module 30 and then the direct current is input to the energy storage battery 20, thereby realizing storage of electric energy.

Please still refer to FIGS. 4 and 5, in some embodiments of the present disclosure, the outer surface of the appliance body 10 is further formed with a third junction 140 electrically connected to the input terminal of the energy storage battery 20, and the energy storage appliance further includes a photovoltaic mechanism 40. The photovoltaic mechanism 40 is electrically connected to the third junction 140 and is configured to supply the direct current to the energy storage battery 20.

It should be understood that the photovoltaic mechanism 40 may convert light energy into electrical energy. When the photovoltaic mechanism 40 is electrically connected to the third junction 140, the energy storage battery 20 can be continuously charged without consuming power from the mains supply grid 50. Thus, by providing the photovoltaic mechanism 40 to generate electric energy, the pressure of the grid can be reduced, the energy consumption of the power system is reduced, energy saving and emission reduction are realized, and the expense of electricity charges can be reduced.

The photovoltaic mechanism 40 is a photovoltaic plate.

In some embodiments of the present disclosure, the photovoltaic mechanism 40 may also be replaced with a natural energy power generation device such as a wind power generation mechanism, a tidal energy generation mechanism, or a geothermal energy generation mechanism.

Please still refer to FIGS. 4 and 5, in some embodiments of the present disclosure, the outer surface of the appliance body 10 is further formed with a fourth junction 150 configured to connect the mains supply grid 50, and the conversion module 30 is further electrically connected between the output terminal of the energy storage battery 20 and the fourth junction 150 and configured to convert the direct current stored in the energy storage battery 20 into an alternating current and deliver the alternating current to the mains supply grid 50.

It should be understood that the photovoltaic mechanism 40 can continuously generate electric energy, and the electric energy may be gradually accumulated in the energy storage battery 20 when the power consumption rate of the appliance is less than the power generation rate of the photovoltaic mechanism 40. In this case, the direct current of the energy storage battery 20 can be converted into the alternating current through the conversion module 30 and the alternating current can be transmitted to the mains supply grid 50 to supply power to the mains supply grid 50. As a result, an additional economic source can be obtained by means of electricity sale, thereby increasing the income.

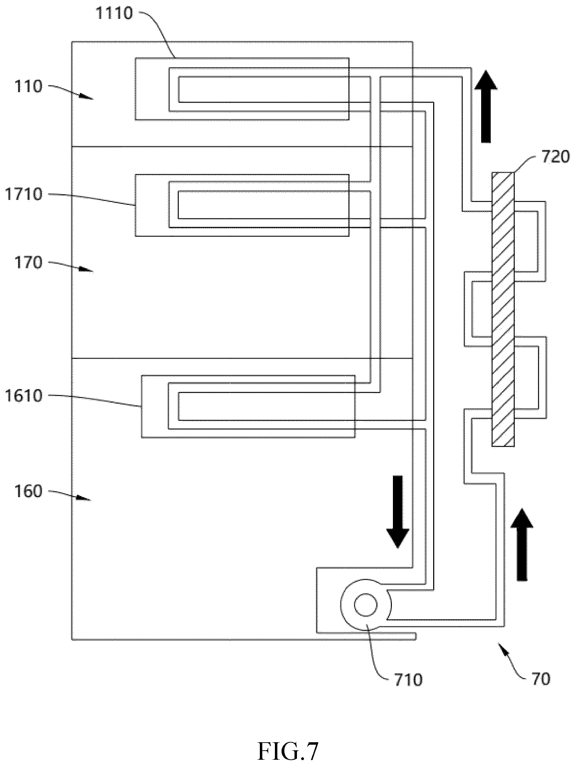

As shown in FIG. 7, in some embodiments of the present disclosure, the appliance body 10 has a cooling mechanism 70, an energy storage evaporator 1110 is disposed within the energy storage chamber 110, and the cooling mechanism 70 is connected to the energy storage evaporator 1110 and configured to supply a low-temperature and low-pressure liquid coolant to the energy storage evaporator 1110.

It should be understood that the energy storage battery 20 may generate heat during operation of the energy storage battery 20. By providing the energy storage evaporator 1110 in the energy storage chamber 110, the cooling mechanism 70 may supply the low-temperature and low-pressure liquid coolant to the energy storage evaporator 1110, and the liquid coolant of low temperature and low pressure can be phase-changed into a low-temperature and low-pressure gaseous coolant in the energy storage evaporator 1110, and the phase change of the coolant can absorb a large amount of heat in the energy storage chamber 110 to cool the energy storage battery 20.

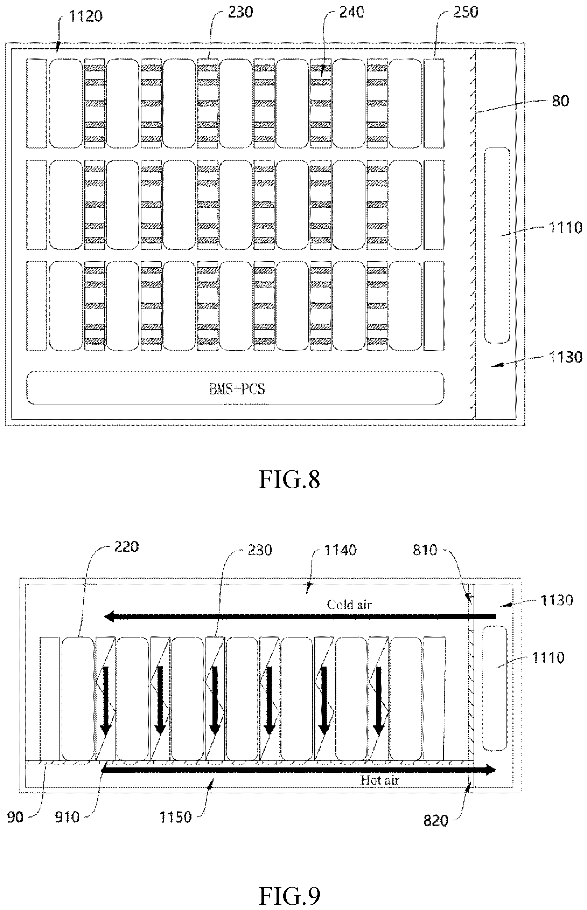

As shown in FIGS. 8 and 9, in some embodiments of the present disclosure, the energy storage chamber 110 is provided with a first separator 80 configured to divide the energy storage chamber 110 into a working cavity 1120 and a cooling cavity 1130, where the first separator 80 is constructed with an air inlet 810 and a return air outlet 820 both configured to communicate the working cavity 1120 with the cooling cavity 1130, the energy storage battery 20 is located in the working cavity 1120, and the energy storage evaporator 1110 is located in the cooling cavity 1130.

The working cavity 1120 and the cooling cavity 1130 are separated by the first separator 80, so that the energy storage battery 20 and the energy storage evaporator 1110 can be installed independently of each other. Based on the arrangement of the air inlet 810 and the return air outlet 820, a direction of airflow can be limited. That is, cold air in the cooling cavity 1130 can only be blown into the working cavity 1120 from the air inlet 810, and hot air in the working cavity 1120 can only be blown into the cooling cavity 1130 from the return air outlet 820, thereby cooling the hot air in the cooling cavity 1130 and preventing the airflow from affecting the heat dissipation effect due to walloping of the airflow.

In some embodiments of the present disclosure, the first separator 80 is provided with a fan at the air inlet 810 and/or the return air outlet 820. It should be understood that the energy storage chamber 110 is an enclosed chamber, and an air flow is generated by the fan to allow the air in the working cavity 1120 and the cooling cavity 1130 to flow continuously, so that the cold air can rapidly enter the working cavity 1120 to cool the energy storage battery 20.

In some embodiments of the present disclosure, the first separator 80 is only installed with a fan at the air inlet 810. In this case, an air inlet end of the fan faces the cooling cavity 1130 and an air outlet end faces the working cavity 1120.

In some embodiments of the present disclosure, the first separator 80 is only installed with a fan at the return air outlet 820. In this case, an air inlet end of the fan faces the working cavity 1120 and an air outlet end faces the cooling cavity 1130.

In some embodiments of the present disclosure, the first separator 80 is installed with fan(s) at the air inlet 810 and the return air outlet 820. An air inlet end of the fan located at the air inlet 810 faces the cooling cavity 1130 and an air outlet end of the fan located at the air inlet 810 faces the working cavity 1120. An air inlet end of the fan located at the return air outlet 820 faces the working cavity 1120 and an air outlet end of the fan located at the return air outlet 820 faces the cooling cavity 1130.

Please refer to FIG. 9, in some embodiments of the present disclosure, the energy storage chamber 110 is provided with a second separator 90. The second separator 90 divides the working cavity 1120 into a storage cavity 1140 and a reflux cavity 1150. The second separator 90 is constructed with one or more ventilation holes 910 for communicating the storage cavity 1140 with the reflux cavity 1150. The energy storage battery 20 is located in the storage cavity 1140. The air inlet 810 communicates the storage cavity 1140 with the cooling cavity 1130. The return air outlet 820 communicates the reflux cavity 1150 with the cooling cavity 1130.

It should be understood that the second separator 90 may divide the working cavity 1120 into the storage cavity 1140 and the reflux cavity 1150 which are disposed individually. The energy storage battery 20 is disposed in the storage cavity 1140, and the reflux cavity 1150 is used as a hot gas reflux channel. As a result, it is possible to limit the direction of the airflow and prevent the airflow from affecting the heat dissipation effect due to walloping of the airflow. The direction of the airflow is the cooling cavity 1130-the air inlet 810-the storage cavity 1140-the ventilation hole 910-the reflux cavity 1150-the return air outlet 820-the cooling cavity 1130.

The first separator 80 is vertically arranged so as to form the working cavity 1120 and the cooling cavity 1130 respectively distributed at a left side and a right side of the first separator 80. Upper and lower ends of the first separator 80 are fixed to upper and lower surfaces of the energy storage chamber 110. Fixing means may be fastener fixing, welding fixing, adhesive fixing, or the like. The second separator 90 is horizontally arranged so as to form the storage cavity 1140 and the reflux cavity 1150 respectively distributed at an upper side and a lower side of the second separator 90. One end of the second separator 90 is fixed to a side surface of the energy storage chamber 110, and another end of the second separator 90 is fixed to the first separator 80. Fixing means may be fastener fixing, welding fixing, adhesive fixing, or the like.

Based on the horizontal arrangement of the second separator 90, the energy storage battery 20 is fixed to the second separator 90.

Referring to FIGS. 1 and 7, in some embodiments of the present disclosure, the appliance body 10 includes a refrigerator. The appliance body 10 further has a freezing chamber 160 and a refrigerating chamber 170. The freezing chamber 160, the refrigerating chamber 170, and the energy storage chamber 110 are sequentially stacked in a lower-upper direction. The cooling mechanism 70 includes a compressor 710, a condenser 720, and a throttle member. An input terminal of the condenser 720 is connected to an output terminal of the compressor 710. An input terminal of the throttle member is connected to an output terminal of the condenser 720. The freezing chamber 160 includes a freezing evaporator 1610. The refrigerating chamber 170 is provided with a refrigerating evaporator 1710. The freezing evaporator 1610 is connected between an output terminal of the throttle member and an input terminal of the compressor 710. The refrigerating evaporator 1710 is connected between the output terminal of the throttle member and the input terminal of the compressor 710. The energy storage evaporator 1110 is connected between the output terminal of the throttle member and the input terminal of the compressor 710.

It should be understood that the appliance body 10 is the refrigerator, and the energy storage battery 20 may supply power to the refrigerator, thereby effectively reducing the decay rate of food in the refrigerator after a sudden power failure. Meanwhile, the refrigerator itself is provided with the cooling mechanism 70 having the compressor 710, the condenser 720, and the throttle member, and the energy storage battery 20 in the energy storage chamber 110 is cooled by the cooling mechanism of the refrigerator, so that a problem that the home product is difficult to dissipate heat can be effectively solved, and the heat dissipation cost of the home product can be reduced.

In the embodiment of the present disclosure, the energy storage chamber 110 is provided above the refrigerator, so that the above space of the refrigerator can be effectively utilized, and waste of the above space of the refrigerator can be prevented. Meanwhile, it is ensured that the energy storage battery 20 does not occupy other spaces in the house, thereby increasing the use area of the house and preventing the energy storage battery 20 from damaging the aesthetic feeling of the house.

A high-temperature and high-pressure gaseous coolant is formed by the compressor 710. After the high-temperature and high-pressure gaseous coolant is flowed from the coolant line to the condenser 720, the high-temperature and high-pressure liquid coolant can be formed in the condenser 720 after the phase change of the high-temperature and high-pressure gaseous coolant. The high-temperature and high-pressure liquid coolant is throttled and depressurized by the throttle member to form the low-temperature and low-pressure liquid coolant, and the low-temperature and low-pressure liquid coolant is flowed into the freezing evaporator 1610, the refrigerating evaporator 1710, and the energy storage evaporator 1110, respectively. The low-temperature and low-pressure liquid coolant cools the freezing chamber 160 through the freezing evaporator 1610, so that the freezing chamber 160 is in a low-temperature state, thereby achieving freezing of food. The low-temperature and low-pressure liquid coolant cools the refrigerating chamber 170 through the refrigerating evaporator 1710, so that the refrigerating chamber 1710 is in a low-temperature state, thereby achieving freezing of food. The low-temperature and low-pressure liquid coolant cools the energy storage chamber 110 through the energy storage evaporator 1110, thereby cooling the energy storage battery 20 in the energy storage chamber 110. The low-temperature and low-pressure liquid coolant may be phase-changed into a low-temperature and low-pressure gaseous coolant in the freezing evaporator 1610, the refrigerating evaporator 1710, and the energy storage evaporator 1110. The low-temperature and low-pressure gaseous coolant is flowed back to the compressor 710 to complete a cycle of the coolant.

The throttle member may employ a capillary tube configured to throttle and depressurize the high-temperature and high-pressure liquid refrigerant discharged from the condenser 720 to form a low-temperature and low-pressure liquid coolant. Of course, the throttle member may further employ an expansion valve or the like, and may be reasonably selected based on cost or the like.

The flow rate of the low-temperature and low-pressure liquid coolant in a respective coolant circuit is reasonably distributed based on requirements of the cooling amount in the freezing chamber 160, the refrigerating chamber 170, and the energy storage chamber 110.

In some embodiments of the present disclosure, the energy storage battery 20 includes a battery module 210 and a battery management system (BMS) that is electrically connected to the battery module 210. The conversion module 30 is integrated into the battery management system. Alternatively, the conversion module 30 is integrated into the battery module 210.

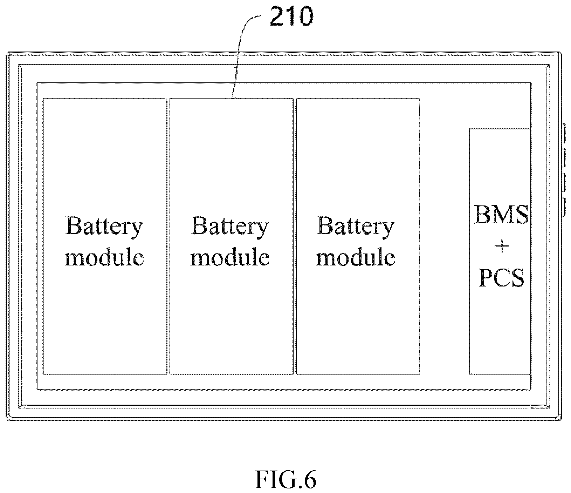

It should be understood that the battery management system may monitor, manage and protect the battery module 210 in real time, and may implement battery status detection, battery performance balancing, fault diagnosis and protection, power calculation and prediction, or the like. As shown in FIG. 6, the conversion module 30 is integrated into the battery management system to realize the integrated arrangement of the conversion module and the energy storage battery 20. Alternatively, the conversion module 30 is integrated into the battery module 210 to realize the integrated arrangement of the conversion module and the energy storage battery 20. Thus, the installation of the conversion module can be facilitated.

The energy storage battery 20 may include a plurality of battery modules 210. The volume of the energy storage chamber 110 may be reasonably designed based on the size of the appliance product, and the number and distribution of the battery modules 210 may be reasonably selected based on the volume of the energy storage chamber 110.

As shown in FIGS. 8 and 9, in some embodiments of the present disclosure, each of the battery modules 210 includes at least two cells 220 arranged at intervals. A support 230 is provided between any two adjacent cells 220. The support 230 is formed with one or more flow channel 240. The flow channels 240 are configured as a flow path for cold air.

It should be understood that not only the support 230 is capable of supporting two adjacent cells 220, but also the cold air may flow through the flow channel 240 formed in the support 230 and may be heat-exchanged with the support 230 and the cells 220 when passing through the flow channel 240, thereby achieving heat dissipation of the cells 220.

The second separator 90 can divide the working cavity 1120 into the storage cavity 1140 and the reflux cavity 1150 respectively distributed at an upper side and a lower side of the second separator 90, and the flow channel 240 formed in the support 230 is generally conductive in an upper-lower direction. In this case, the direction of the airflow is the cooling cavity 1130-the air inlet 810-the storage cavity 1140-the flow channel 240-the ventilation hole 910-the reflux cavity 1150-the return air outlet 820-the cooling cavity 1130.

In some embodiments of the present disclosure, the support 230 is a square frame structure having a plurality of generally "Z" shaped reinforcing ribs and a plurality of flow channels 240 disposed therein. The frame structure-based support 230 can make the support 230 lighter and prevent the energy storage battery 20 from being overweight and affecting carrying and movement of the appliance.

In some embodiments, each of the battery modules 210 further includes end plates 250 at both ends of the battery module 210, the end plates 250 abutting the cells 220 at the ends.

In some embodiments of the present disclosure, the energy storage chamber 110 is provided with a second separator 90. The second separator 90 divides the working cavity 1120 of the energy storage chamber 110 into a storage cavity 1140 and a reflux cavity 1150. The second separator 90 is constructed with one or more ventilation holes 910 for communicating the storage cavity 1140 with the reflux cavity 1150. The ventilation holes 910 are in one-to-one correspondence with the flow channels 240.

It should be understood that hot air blown from the flow channel 240 is flowed directly from the ventilation hole 910 into the reflux cavity 1150. Each of flow channels 240 corresponds to corresponding one of ventilation holes 910 to prevent the airflow from affecting the cooling effect due to walloping of the airflow.

Another embodiment of the present disclosure further provides a power supply system. The power supply system includes a load circuit 60, a load, and the energy storage appliance as described in the previous embodiments. The load is electrically connected to the load circuit 60. The energy storage battery 20 is electrically connected to the load circuit 60 through the second junction 130.

In the embodiment of the present disclosure, the energy storage battery 20 is stored in the energy storage chamber 110 by constructing the energy storage chamber 110 in the appliance body 10, and no longer occupies the indoor space based on the built-in energy storage battery 20, so that the use area of the house can be increased, and the energy storage battery 20 can be simultaneously carried and installed along with the appliance body 10, thereby reducing the installation cost and improving the installation efficiency. The mains supply grid 50 may supply the direct current to the energy storage battery 20 through the first junction 120 and the conversion module 30, and the energy storage battery 20 may store electric energy as a standby electrical energy or directly output the electrical energy. The energy storage battery 20 may directly supply power to the appliance body 10 or supply power to the load circuit 60 through the second junction 130, thereby realizing power consumption of the appliance body 10 and other loads.

Since the energy storage battery 20 directly supplies power to the load of the appliance body 10, the appliance body 10 can be kept in a power supply state in case of a sudden power failure condition, so that it is possible to ensure that neither the electric appliance body 10 nor the load is powered off, and to ensure continuous use of the load.

The mains supply grid 50 may supply power to the load circuit 60 through the energy storage battery 20, and the energy storage battery 20 may store electric energy during a power valley period and supply power to the load of the load circuit 60 during a power peak period. Thus, by reasonably selecting an energy storage period, the pressure of the grid is reduced, the energy consumption of the power system is reduced, energy saving and emission reduction are realized, and the expense of electricity charges can be reduced.

## Claims

1. An energy storage appliance, comprising:
an appliance body (10) having an energy storage chamber (110), wherein an outer surface of the appliance body (10) is formed with both a first junction (120) configured to connect a mains supply grid (50) and a second junction (130) configured to connect a load circuit (60); and
an energy storage battery (20) installed in the energy storage chamber (110), wherein an input terminal of the energy storage battery (20) is electrically connected to the first junction (120) and configured to charge the energy storage battery (20) through the mains supply grid (50), and an output terminal of the energy storage battery (20) is electrically connected to both the appliance body (10) and the second junction (130) and configured to supply power to both the appliance body (10) and the load circuit (60).

2. The energy storage appliance of claim 1, further comprising:
a conversion module (30) installed in the energy storage chamber (110), wherein the conversion module (30) is electrically connected between the first junction (120) and the input terminal of the energy storage battery (20), and is configured to convert an alternating current of the mains supply grid (50) into a direct current and deliver the direct current to the energy storage battery (20).

3. The energy storage appliance of claim 2, wherein the outer surface of the appliance body (10) is further formed with a third junction (140) electrically connected to the input terminal of the energy storage battery (20), and the energy storage appliance further comprises:
a photovoltaic mechanism (40) electrically connected to the third junction (140) and configured to supply the direct current to the energy storage battery (20).

4. The energy storage appliance of claim 3, wherein the outer surface of the appliance body (10) is further formed with a fourth junction (150) configured to connect the mains supply grid (50), and the conversion module (30) is further electrically connected between the output terminal of the energy storage battery (20) and the fourth junction (150), and is configured to convert the direct current stored in the energy storage battery (20) into an alternating current and deliver the alternating current to the mains supply grid (50).

5. The energy storage appliance of any one of claims 1-4, wherein the appliance body (10) has a cooling mechanism (70), the energy storage chamber (110) is provided with an energy storage evaporator (1110), and the cooling mechanism (70) is connected to the energy storage evaporator (1110) and configured to supply a low-temperature and low-pressure liquid coolant to the energy storage evaporator (1110).

6. The energy storage appliance of claim 5, wherein: the energy storage chamber (110) is provided with a first separator (80) configured to divide the energy storage chamber (110) into a working cavity (1120) and a cooling cavity (1130), wherein the first separator (80) is constructed with an air inlet (810) and a return air outlet (820) both configured to communicate the working cavity (1120) with the cooling cavity (1130), the energy storage battery (20) is located in the working cavity (1120), and the energy storage evaporator (1110) is located in the cooling cavity (1130).

7. The energy storage appliance of claim 6, wherein the first separator (80) is provided with a fan at at least one of the air inlet (810) and the return air outlet (820).

8. The energy storage appliance of claim 6 or 7, wherein: the energy storage chamber (110) is provided with a second separator (90), wherein the second separator (90) divides the working cavity (1120) into a storage cavity (1140) and a reflux cavity (1150), the second separator (90) is constructed with one or more ventilation holes (910) for communicating the storage cavity (1140) with the reflux cavity (1150), the energy storage battery (20) is located in the storage cavity (1140), the air inlet (810) communicates the storage cavity (1140) with the cooling cavity (1130), and the return air outlet (820) communicates the reflux cavity (1150) with the cooling cavity (1130).

9. The energy storage appliance of any one of claims 5-8, wherein the appliance body (10) comprises a refrigerator, the appliance body (10) further has a freezing chamber (160) and a refrigerating chamber (170), the freezing chamber (160), the refrigerating chamber (170) and the energy storage chamber (110) are stacked in sequence in a lower-upper direction, and the cooling mechanism (70) comprises:
a compressor (710);
a condenser (720), wherein an input terminal of the condenser (720) is connected to an output terminal of the compressor (710); and
a throttle member, wherein an input terminal of the throttle member is connected to an output terminal of the condenser (720);
wherein, the freezing chamber (160) is provided with a freezing evaporator (1610), the refrigerating chamber (170) is provided with a refrigerating evaporator (1710), the freezing evaporator (1610) is connected between an output terminal of the throttle member and an input terminal of the compressor (710), the refrigerating evaporator (1710) is connected between the output terminal of the throttle member and the input terminal of the compressor (710), and the energy storage evaporator (1110) is connected between the output terminal of the throttle member and the input terminal of the compressor (710).

10. The energy storage appliance of any one of claims 2-9, wherein the energy storage battery (20) comprises a battery module (210) and a battery management system electrically connected to the battery module (210), and the conversion module (30) is integrated into the battery management system or the battery module (210).

11. The energy storage appliance of claim 10, wherein the battery module (210) comprises at least two cells (220) arranged at intervals, and a support (230) is provided between any two adjacent ones of the cells (220) and formed with one or more flow channels (240) configured as a flow path for cold air.

12. The energy storage appliance of claim 11, wherein: the battery module (210) further comprises end plates (250) at both ends of the battery module (210), the end plates (250) abutting the cells (220) at the ends.

13. The energy storage appliance of claim 11 or 12, wherein: the energy storage chamber (110) is provided with a second separator (90), wherein the second separator (90) divides a working cavity (1120) of the energy storage chamber (110) into a storage cavity (1140) and a reflux cavity (1150), the second separator (90) is constructed with one or more ventilation holes (910) for communicating the storage cavity (1140) with the reflux cavity (1150), and the ventilation holes (910) are in one-to-one correspondence with the flow channels (240).

14. A power supply system, comprising:
a load circuit (60);
a load electrically connected to the load circuit (60); and
the energy storage appliance of any one of claims 1-13;
wherein the energy storage battery (20) is electrically connected to the load circuit (60) through the second junction (130).

15. The power supply system, wherein the mains supply grid (50) supplies power to the load circuit (60) through the energy storage battery (20), and the energy storage battery (20) stores electric energy during a power valley period and supplies power to the load of the load circuit (60) during a power peak period.
